# EUROPÄISCHE PATENTSCHRIFT

(11) **EP 1 218 659 B1**
(45) Veröffentlichungstag und Bekanntmachung des Hinweises auf die Patenterteilung: **04.08.2004**
(21) Anmeldenummer: 00967833.5
(22) Anmeldetag: 30.09.2000
(51) Int. Cl.: F16L 27/111, F16L 51/02

(54) **VORRICHTUNG ZUM LÖSBAREN VERBINDEN VON WÄRMEDEHNUNGEN UNTERWORFENEN ROHREN**
DEVICE FOR RELEASABLY LINKING THE EXTREMITIES OF PIPES THAT ARE SUBJECT TO THERMAL EXPANSIONS
DISPOSITIF POUR RACCORDER DE FA ON LIBERABLE DES EXTREMITES DE TUYAUX SOUMISES A DES DILATIONS THERMIQUES

(30) Priorität: 07.10.1999 DE 19948169
(43) Veröffentlichungstag der Anmeldung: 03.07.2002
(73) Patentinhaber: TUCHENHAGEN GmbH, 21514 Büchen (DE)
(72) Erfinder: RAUEN, Wolfgang, 24149 Kiel (DE); COURA, Herbert, Robert, 21514 Büchen (DE); WORCZINSKI, Günter, 21514 Büchen (DE)
(74) Vertreter: Glaeser, Joachim, Dipl.-Ing.
(86) Internationale Anmeldenummer: PCT/EP2000/009600
(87) Internationale Veröffentlichungsnummer: WO 2001/025670

(56) Entgegenhaltungen:
- DD-A- 266 835
- DE-U- 8 804 366
- GB-A- 1 260 143
- SE-B- 422 837
- US-A- 5 702 132

## Beschreibung

Die Erfindung betrifft eine Vorrichtung zum lösbaren Verbinden von Wärmedehnungen unterworfenen Rohren nach dem Oberbegriff des Anspruchs 1.

Ein allgemein bekanntes Problem liegt in den Verspannungen, die sich aufgrund von Wärmedehnungen in Rohrsystemen ergeben und dadurch Schäden verursachen können. Insbesondere in Produktionsanlagen der Nahrungsmittel- und Getränkeindustrie unterliegen Rohrsysteme oder deren Teilbereiche unterschiedlichen Temperaturen, da die verfahrenstechnischen Prozeßschritte im Rahmen der Produktion bei unterschiedlichen Temperaturen ablaufen oder weil im Zuge der automatischen Reinigung (Wechsel von kalt und warm) größere Temperaturunterschiede zwangsläufig auftreten. So zeigt die Erfahrung, daß die dabei auftretenden Temperaturunterschiede 60 bis 80° Celsius betragen können, was bei einem Stahlrohr in nicht rostender Ausführung (hochlegierter Cr-Ni-Stahl) eine Längenänderung von ca. 1 bis 1,4 mm/(m Rohr) hervorruft. Bei einer Erwärmung um den vorgenannten Temperaturunterschied ergibt sich eine dementsprechende Längenausdehung (Dilatation), während eine nachfolgende Abkühlung um die entsprechende Größe eine gleichgroße Längenverkürzung (Kontraktion) nach sich zieht.

Aus der GB-A-1 260 143 ist eine Vorrichtung mit den gattungsbildenden Merkmalen des Gegenstandes der vorliegenden Erfindung bekannt, die hohen hygienischen Anforderungen im kritischen Spalt zwischen Anschlußstück einerseits und dem zugeordneten Endabschnitt des Kompensationselementes andererseits nicht gerecht wird.

In der **DE-OS 22 39153** ist ein Kompensator mit allseitiger Verlagerung der Anschlußflansche beschrieben, der die gattungsbildenden Merkmale der eingangs beschriebenen Vorrichtung im wesentlichen aufweist. Bei dieser Vorrichtung überbrückt eine elastische Manschette die axial beabstandeten Rohrstutzen derart, daß letztere von beiden Seiten unter Vorspannung in die Manschette eingeführt sind. Die Manschette wird außenseits, gleichfalls unter Vorspannung, von einem starren Distanzrohr berandet, das keine axialen Längenänderungen der Manschette zuläßt. Lediglich bei winkligen und radialen Verlagerungen der Rohrstutzen zueinander verändert sich aufgrund der begrenzten radialen elastischen Verformbarkeit der Manschette die zentrische Lage des Distanzrohres zur Rohrleitung. Demzufolge werden Relativbewegungen der Rohrstutzen zueinander dadurch kompensiert, daß die Einheit, bestehend aus der Manschette und dem Distanzrohr, im Falle eines Dehnungsausgleichs auf beiden Rohrstutzen insgesamt oder auf einem der Rohrstutzen verschoben wird. Die Manschette kompensiert demnach die notwendige axiale Ausgleichsbewegung nicht durch elastische Stauchung oder Streckung, sondern durch Verschiebung auf den in Frage kommenden Rohrstutzen.

Die Manschette stellt eine erste Stufe der notwendigen Abdichtung zwischen den Anschlußflanschen dar. Eine weitere Abdichtung als zweite Stufe erfolgt durch einen Faltenbalg, der zwei Führungshülsen überbrückt, die das Distanzrohr axial führen und begrenzen und von denen die eine an dem einen und die andere an dem anderen Rohrstutzen angeordnet ist.

Die Relativbewegung der Manschette gegenüber den Rohrstutzen im Falle eines Dehnungsausgleichs und der zwischen der Manschette und dem Faltenbalg gebildete, in sich geschlossene Hohlraum verbieten einen Einsatz dieser bekannten Vorrichtung beispielsweise in Produktionsanlagen der Nahrungsmittel- und Getränkeindustrie, da eine derartige Anordnung den dort zu fordernden hygienischen Anforderungen nicht gerecht wird. Durch die vorstehend erwähnte Relativbewegung zwischen der Manschette und den Rohrstutzen kann es zu Produktverschleppung in den Bereich zwischen Rohrstutzen und Manschette und auch in den nachgelagerten Bereich zwischen Manschette und Faltenbalg kommen. Da dieser Bereich offensichtlich nicht gereinigt werden kann, kommt es dort zwangsläufig früher oder später zur Verkeimung, die bei einer späteren Produktfahrt aufgrund einer Rückverschleppung zur Rekontamination des Produktes führen kann Auch in den einerseits von der Manschette und andererseits vom Faltenbalg begrenzten Hohlraum können von außen Fremdstoffe eindringen, die über den vorstehend beschriebenen Verschleppungsweg zu einer Kontamination des Produkts führen können.

Dehnungskompensatoren, die einerseits den in Produktionsanlagen der Nahrungsmittel- und Getränkeindustrie zu stellenden hygienischen Anforderungen gerecht werden und andererseits Wärmedehnungen, ausgeprägt als Dilatationen oder Kontraktionen, mit hinreichender Sicherheit aufnehmen, sind ebenfalls hinlänglich bekannt. Dabei haben sich verschiedene Ausführungsformen herausgebildet, wie beispielsweise ein VARIVENT-Dehnungsausgleicher (siehe Firmendruckschrift Tuchenhagen, 5.042.0d), Wellrohr-Kompensator, U-Bogen-Kompensator oder eine Rohrverlegung mit entsprechenden Ausgleichsschenkeln. Derartige Maßnahmen lassen sich jedoch nur bei langen Rohrleitungsstrecken und ausreichenden Platzverhältnissen realisieren. Darüber hinaus sind diese bekannten Dehnungskompensatoren nicht gegen axiales Auseinanderdrücken durch den Rohrinnendruck geschützt.

Vielfach werden heute komplexe Rohrleitungssysteme, in denen sich Rohrleitungen in mehreren vertikal übereinander angeordneten Ebenen kreuzen, an diesen Kreuzungspunkten mit schaltbaren Ventilen versehen, wobei eine Vielzahl von Ventilen in einer sog. Ventilmatrix oder einem Ventilblock zusammengefaßt sind Eine derartige Anordnung wird in der Regel vormontiert und aus Platz- und Kostengründen ist man hierbei bestrebt, diese so kompakt wie möglich auszuführen. Dies bedeutet wiederum, daß die Rohrverbindungen zwischen den einzelnen Ventilgehäusen relativ kurz ausgeführt sind und das Gesamtsystem der Ventilmatrix ihrer vemetzten Struktur wegen eine außerordentlich große Steifigkeit besitzt.

In den vormontierten Anordnungen können die bekannten Dehnungskompensatoren, die zwar hohen hygienischen Anforderungen gerecht werden, aus Platzgründen nicht angeordnet werden. Zwar sind die Rohrleitungsabschnitte zwischen den einzelnen Ventilgehäusen relativ kurz, jedoch ergeben sich bereits bei diesen relativ geringen Abmessungsverhältnissen infolge der hohen Steifigkeit der Gesamtanordnung hohe Warmespannungen, die noch durch unvermeidbare Fertigungsungenauigkeiten vergrößert werden. Das vorliegende Problem wird noch vergrößert, wenn die Ventile, die aus mehreren übereinander angeordneten und durch Sitzringe verbundene Ventilgehäuseteilen bestehen können, mit verschweißten Sitzringen ausgestattet sind, wodurch eine erhöhte Steifigkeit der Ventilgehäuse und damit ein geringeres Spannungen abbauendes Deformationsvermögen der einzelnen Ventilgehäuse gegeben ist.

Während die aus den Wärmedehnungen resultierenden Spannungen innerhalb der vorgenannten Anordnungen bislang zwangsläufig hinzunehmen sind, lassen sich die durch Fertigungsungenauigkeit bedingten Spannungen in Grenzen beeinflussen. Hierzu sind allerdings die Anforderungen an die Genauigkeit bei der Fertigung zu erhöhen, was wiederum mit hohen Kosten verbunden ist.

Zusammenfassend läßt sich feststellen, daß insbesondere bei der kompakten Anordnung von Ventilen in einem Ventilblock oder einer Ventilmatrix kein Platz für die bekannten Dehnungskompensatoren gegeben ist, daß andererseits infolge der hohen Steifigkeit der Gesamtanordnung bereits geringe Fertigungsungenauigkeiten und Temperaturunterschiede in der vorgenannten Größenordnung Spannungen ergeben können, die zu erhöhtem Verschleiß- und erhöhter Rißgefahr führen oder diesen Gefahren zumindest Vorschub leisten. Selbst bei weitgehend spannungsfreier und damit aufwendiger und maßgenauer Fertigung der vormontierten Ventilblöcke oder Ventilmatrizes sind die aus den auftretenden Temperaturänderungen resultierenden Längenänderungen bzw. Wärmespannungen unvermeidlich.

Es ist Aufgabe der vorliegenden Erfindung, eine Vorrichtung zum lösbaren Verbinden von Wärmedehnungen unterworfenen Rohrenden zu schaffen, die die vorgenannten Warmedehnungen aufnehmen kann, die gegen Öffnen durch Innendruck (Über- oder Unterdruck gegen Atmosphärendruck) gesichert ist, die platzsparende und kompakte Bauform aufweist und die hohen hygienischen Anforderungen gerecht wird.

Die Aufgabe wird durch die Merkmale des Anspruchs 1 gelöst. Vorteilhafte Ausgestaltungen der vorgeschlagenen Vorrichtung sind Gegenstand der Unteransprüche.

Die Vorrichtung gemäß der Erfindung schafft die Voraussetzungen, daß Wärmedehnungen durch die axiale Verschiebebewegung der Anschlußteile zueinander weitestgehend spannungsfrei möglich sind. Da im Rahmen der vorgenannten Anwendungen die auftretenden Längenänderungen relativ gering und auch weitgehend vorhersehbar sind, können sie durch die vorgeschlagene Vorrichtung meist vollständig kompensiert werden.

Dabei wird die notwendige axiale Ausgleichsbewegung der Rohrenden zueinander, sei es nun eine Verkürzung oder eine Vergrößerung ihres jeweiligen Abstandes, durch elastische Deformation des Kompensationselementes aufgenommen Die endseitige Einspannung des Kompensationselementes ist dabei derart ausgestaltet, daß eine definierte Anpressung am zugeordneten Anschlußstück erfolgt, und zwar unabhängig von der im jeweiligen Einbauzustand gegebenen Vorspannung des Kompensationselementes. Diese Anordnung sorgt für eindeutige Abdichtungsverhältnisse im kritischen Spalt zwischen Anschlußstück einerseits und dem zugeordneten Endabschnitt des Kompensationselementes andererseits. Dies gelingt insbesondere dadurch, daß in jedem der beiden Endabschnitte eines Deformationsteils des Kompensationselementes ein Halte- und Spannring einvulkanisiert ist, der den zugeordneten Endabschnitt in formschlüssiger Verbindung mit dem an diesem außenseits angreifenden jeweiligen Anschlußgegenstück auf das zugeordnete Anschlußstück definiert anpreßt. Die begrenzte Duktilität des Kompensationselementes, vorzugsweise in axialer Richtung, wird durch seine schlauchförmige Ausgestaltung erreicht.

Das Kompensationselement bleibt, abgesehen von Beanspruchungen aus Überoder Unterdruck gegenüber Atmosphärendruck, weitgehend frei von radialen Kräften, da der erste und der zweite Anschlußteil im wesentlichen koaxial zueinander geführt werden. Um das Deformationsteil des Kompensationselementes, das gemäß einem weiteren Vorschlag aus einem sogenannten Elastomer hergestellt ist, vor Beanspruchungen zu schützen, die außerhalb der für das jeweilige Material zulässigen Grenzwerte liegen, sind zwei metallische Anschläge vorgesehen, die die axiale Relativbewegung der Anschlußteile zueinander begrenzen.

Die Anschlußteile sind entsprechend einem weiteren Vorschlag entweder jeweils als Flanschverbindung oder als Rohrverschraubung ausgeführt. Besonders einfach gestaltet sich die vorgenannte Flanschverbindung und sowohl die Montage des Kompensationselementes zwischen den Anschlußstücken der Vorrichtung als auch seine Demontage werden vereinfacht, wenn das Anschlußstück und das zugeordnete Anschlußgegenstück miteinander verschraubt sind.

Eine vorteilhafte Ausgestaltung des Kompensationselementes sieht vor, daß das Kompensationselement innenseits durchgehend glatt und daß es in seinem zwischen den beiden Halte- und Spannringen befindlichen mittleren Bereich außenseits mit einer wellenförmigen Kontur ausgeführt ist. Die innenseitige Ausführung sorgt dafür, daß sich keine Produkt- oder Reinigungsmittelreste in diesem Bereich festsetzen können und eine Reinigung dieses Bereiches sehr leicht und wirkungsvoll möglich ist. Die außenseitige wellenförmige Kontur stellt mit ihren Erhebungen sicher, daß das Kompensationselement in diesem Bereich eine gewisse Eigensteifigkeit gegen radiale Verformungen und ein notwendiges axiales Deformationsvermögen besitzt. Um das Kompensationselement gegen Über- oder Unterdruck gegenüber Atmosphäre zusätzlich zu stabilisieren, ist wenigstens in einer der wellenförmigen Erhebungen ein das Kompensationselement vollständig umschließender Stützung einvulkanisiert. Maximale diesbezügliche Steifigkeit wird gemäß einer vorteilhaften Ausgestaltung dadurch sichergestellt, daß in jeder Erhebung ein Stützring einvulkanisiert ist.

Die definierte Anpressung des jeweiligen Endabschnittes des Kompensationselementes wird gemäß einer vorteilhaften Ausgestaltung dadurch sichergestellt, daß der Endabschnitt vom zugeordneten Halte- und Spannring außenseits berandet ist, mit diesem formschlüssig verzahnt ist und über dessen stirnseitiges freies Ende ein Stück übersteht. Das jeweils überstehende Ende steht zur Deformation zur Verfügung, wobei allerdings nicht das stirnseitige freie Ende des Halte- und Spannringes durch metallische Anlage am zugeordneten Anschlußstück diese Deformation begrenzt, sondern die am Anschlußstück anliegende stirnseitige Begrenzungsfläche des zugeordneten Anschlußgegenstückes.

Die Montage des Kompensationselementes und seine Demontage gestalten sich besonders einfach und vorteilhaft, wenn, wie dies ebenfalls vorgeschlagen wird, eine außenseitige freie Mantelfläche des Halte- und Spannringes eine umlaufende, halbkreisförmige Nut aufweist, in die ein Sprengring mit kreisförmigem Querschnitt eingelegt ist. Dieser Sprengring stützt sich andererseits an einer durch eine umlaufende Ausnehmung im Anschlußgegenstück gebildete Schulter in vom Anschlußstück wegweisender Richtung ab, und zwar dergestalt, daß dabei das stimseitige freie Ende des Halte- und Spannringes in der bereits vorstehend beschriebenen Weise um einen definierten axialen Abstand gegenüber der dem Anschlußstück zugewandten Begrenzungsfläche des Anschlußgegenstückes zurücktritt. Dadurch ist sichergestellt, daß die Deformation des Endabschnittes des Kompensationselementes nicht durch vorzeitige Anlage des stimseitigen freien Endes des Halte- und Spannringes am Anschlußstück behindert wird.

Es hat sich zur Erlangung eines ausreichenden Deformationsvermögens des Kompensationselementes als besonders vorteilhaft erwiesen, wenn im mittleren Bereich des Deformationsteils des Kompensationselementes vier bis sechs untereinander im wesentlichen gleiche Erhebungen vorgesehen sind, von denen benachbarte jeweils über eine gerundete nutformige Ausnehmung verbunden sind.

Eine einfache und zuverlässige gegenseitige Führung des ersten und des zweiten Anschlußgegenstückes wird gemäß einem anderen Vorschlag dadurch erreicht, daß ein Führungsbolzen vorgesehen ist, der in dem einen Anschlußgegenstück verankert und in dem anderen Anschlußgegenstück verschieblich geführt ist.

Die metallischen Anschläge der Vorrichtung, die zum einen ihre Dilatation (Dehnungsweg) und zum anderen ihre Kontraktion (Stauchungsweg) begrenzen, wird dadurch in sehr einfacher Weise erreicht, daß der Stauchungsweg durch zwischen den Anschlußgegenstücken angeordnete, auf den Führungsbolzen jeweils gelagerte Distanzbuchsen und daß der Dehnungsweg durch einen als Anschlag ausgebildeten Kopf des Führungsbolzens begrenzt sind. Die Länge der Distanzbuchsen ist jeweils leicht an die Gegebenheiten anpaßbar. Der Weg bis zur Anlage des gegenüber dem Führungsbolzen durchmesservergrößerten Kopfes am in Frage kommenden Anschlußgegenstück ist ebenfalls auf einfache Weise veränderbar, so daß der Stauchungs- und der Dehnungsweg, jeweils unabhängig voneinander, verändert werden können und somit der für das Kompensationselement verwendete Werkstoff, abhängig vom Einbauzustand und der Ausgangsstellung und der Betriebstemperatur der Vorrichtung, hinsichtlich der zulässigen Zug- und Druckspannungen optimal genutzt werden kann.

Es hat sich als besonders vorteilhaft und hinsichtlich des Kompensationselementes als lebensdauerverlängernd herausgestellt, wenn letzteres derart ausgelegt ist, daß der zwischen den beiden Halte- und Spannringen befindliche mittlere Bereich des Deformationsteils, im Einbauzustand und in der Ausgangsstellung und bei Betriebstemperatur der Vorrichtung, im wesentlichen spannungsfrei bleibt, und daß, betragsmäßig gesehen, der zur Verfügung stehende Stauchungsweg annähernd doppelt so groß wie der zur Verfügung stehende Dehnungsweg ausgelegt ist. Dieses Auslegungskriterium tragt der Erkenntnis Rechnung, daß die üblicherweise zur Anwendung kommenden Elastomere größere Druck- als Zugkräfte ertragen können.

Für die hier in Rede stehenden Anwendungen der erfindungsgemäßen Vorrichtung hat sich gezeigt, daß eine aus dem Stauchungs- und dem Dehnungsweg resultierende gesamte Längenänderung des Kompensationselementes von annahernd 3 mm völlig ausreichend ist.

Ein Ausführungsbeispiel der Erfindung ist in der Zeichnung dargestellt und wird nachfolgend beschrieben. Es zeigen
- **Figur 1**: einen Mittelschnitt durch eine vorteilhafte Ausführungsform der vorgeschlagenen Vorrichtung gemäß der Erfindung, wobei die Schnittebene derart angeordnet ist, daß sie durch die Verbindungsschrauben zwischen Anschluß- und Anschlußgegenstück verläuft;
- **Figur 2**: einen Mittelschnitt durch die Ausführungsform gemäß Figur 1, wobei die Schnittebene in der Ebene der Führungsbolzen verläuft;
- **Figur 3**: in vergrößerter Darstellung eine in Figur 2 mit "X" gekennzeichnete Einzelheit des Kompensationselementes im Bereich seines endseitig angeordneten Halte- und Spannringes;
- **Figur 4**: einen Mittelschnitt durch das aus der erfindungsgemäßen Vorrichtung ausgebaute Kompensationselement, wie es hinsichtlich seiner speziellen Ausgestaltung in den Ausführungsformen gemäß den Figuren 1 bis 3 Verwendung findet und
- **Figur 5**: einen Ausschnitt aus einer Ventilmatrix, wobei, bezogen auf die Darstellungslage, jeweils zwischen zwei benachbarten Ventilgehäusen eines waagerechten Rohrleitungsstranges eine Vorrichtung gemäß der Erfindung angeordnet und in diesem Zusammenhang gleichzeitig dargestellt ist, wie sich beispielsweise eine Längendilatation der mittleren Rohrleitung im Zusammenwirken mit der vorgeschlagenen Vorrichtung auswirkt.

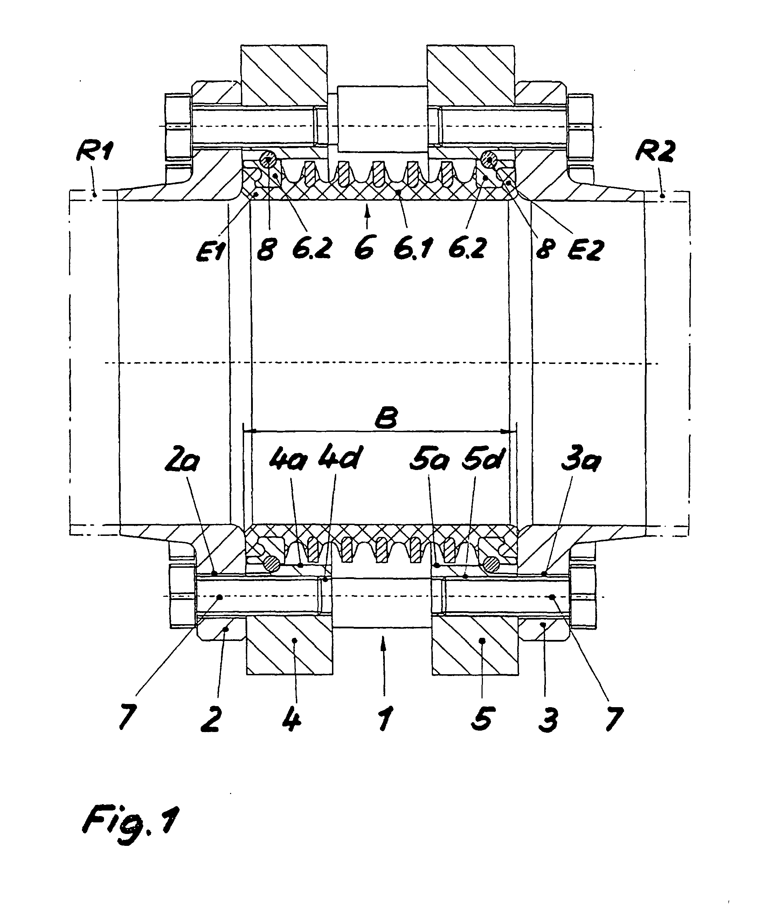

Eine Vorrichtung 1 (**Figur 1**) verbindet ein erstes Rohrende R1 eines nicht dargestellten Rohres mit einem zweiten Rohrende R2 eines gleichfalls nicht dargestellten anderen Rohres. Dies geschieht dadurch, daß das erste Rohrende R1 mit einem als Flansch ausgebildeten ersten Anschlußstück 2 (erster Flansch 2) und das zweite Rohrende R2 mit einem ebenfalls als Flansch ausgebildeten zweiten Anschlußstück 3 (zweiter Flansch 3) verbunden sind. Die Verbindung ist jeweils stoffschlüssig, vorzugsweise in Form einer Schweißverbindung, ausgeführt. Auf der dem zweiten Flansch 3 zugewendeten Stirnfläche des ersten Flansches 2 ist letzterer mit einem ringförmigen ersten Anschlußgegenstück 4 (erster Gegenflansch 4) lösbar, vorzugsweise mittels Verbindungsschrauben 7, verbunden. In gleicher Weise trägt auch der zweite Flansch 3 auf seiner dem ersten Flansch 2 zugewendeten Stirnfläche ein ebenfalls ringförmig ausgebildetes zweites Anschlußgegenstück 5 (zweiter Gegenflansch 5). Die Verbindungsschrauben 7 sind dabei durch erste Durchgangsbohrungen 2a im ersten Flansch 2 bzw. zweite Durchgangsbohrungen 3a im zweiten Flansch 3 hindurchgeführt und in ersten Gewindebohrungen 4d im ersten Gegenflansch 4 bzw. zweite Gewindebohrungen 5d im zweiten Gegenflansch 5 eingeschraubt. Ein erster Innendurchgang 4a des ringförmig ausgebildeten ersten Gegenflansches 4 und ein ebensolcher zweiter Innendurchgang 5a des gleichfalls ringförmig ausgeführten zweiten Gegenflansches 5 sind derart bemessen, daß ein Kompensationselement 6, das einen Einbauabstand B zwischen dem ersten und dem zweiten Flansch 2, 3 überbrückt, in den Innendurchgängen 4a, 5a gerade Aufnahme findet.

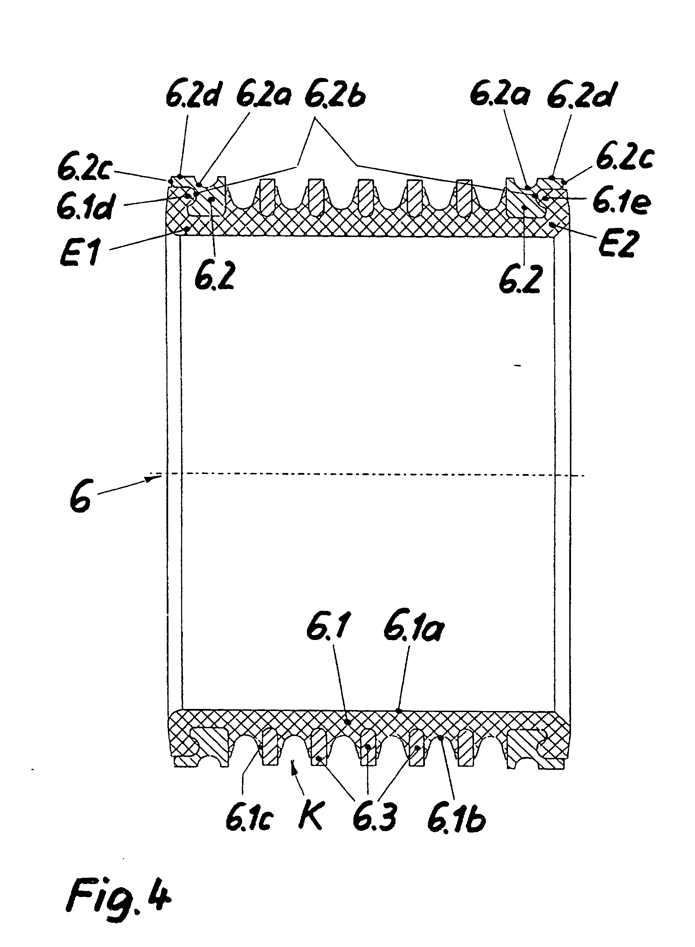

Das Kompensationselement 6 besitzt schlauchförmige Gestalt und in jedem seiner beiden Endabschnitte E1, E2 ist ein Halte- und Spannring 6.2 einvulkanisiert Dabei ist der Endabschnitt E1, E2 vom zugeordneten Halte- und Spannring 6.2 außenseits berandet, mit diesem formschlüssig verzahnt, und er steht über ein stimseitiges freies Ende 6.2c des Halte- und Spannringes 6.2 ein Stück über (siehe hierzu auch **Figur 4**).

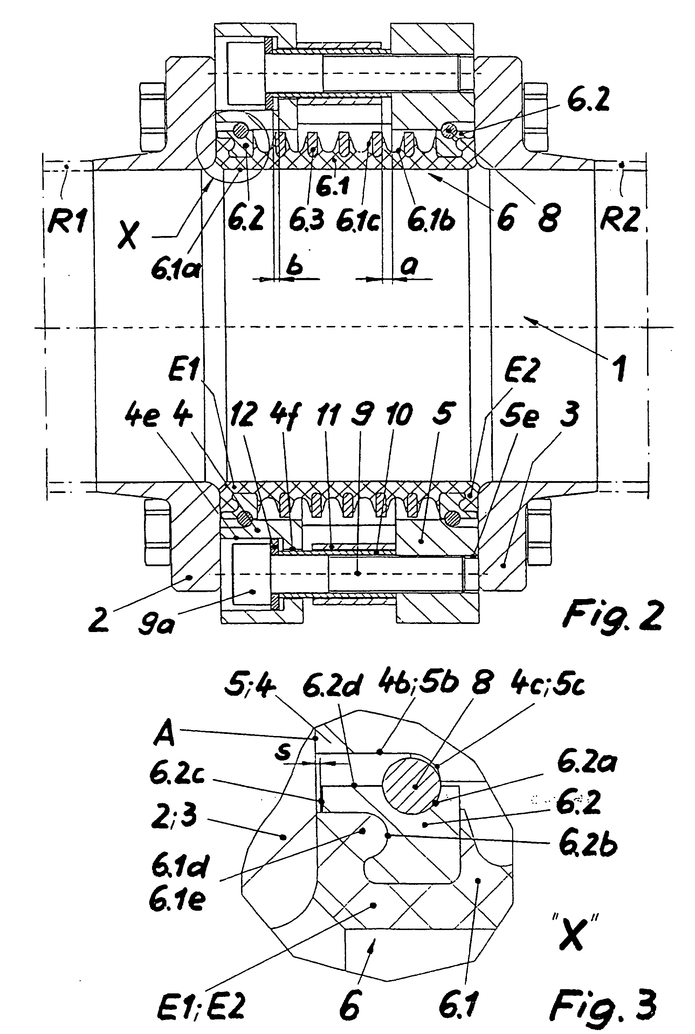

Das Kompensationselement 6 ist vorzugsweise aus einem Elastomer hergestellt, das Änderungen des Abstandes zwischen dem ersten und dem zweiten Flansch 2, 3 durch elastische Deformation zuläßt (siehe hierzu auch **Figur 3**). An dieser elastischen Deformation ist im wesentlichen ein zwischen den beiden Halte- und Spannringen 6.2 befindlicher mittlerer Bereich eines Deformationsteils 6.1 des Kompensationselementes 6 beteiligt (**Figur 1**). Die Endabschnitte E1, E2 des Deformationsteils 6.1 leisten dabei keinen nennenswerten Beitrag, da ihre axiale Deformation durch den in diesem Bereich jeweils einvulkanisierten Halte- und Spannring 6.2 begrenzt ist. Der über das stimseitige freie Ende 6.2c des Halteund Spannringes 6.2 überstehende Teil des Endabschnittes E1 bzw. E2 trägt bei seiner Deformation auf die Einbaulänge B in der Einbaulage der Vomchtung 1 dazu bei, daß die Endabschnitte E1 bzw. E2 definiert auf den zugeordneten Flansch 2, 3 angepreßt werden.

Die Fixierung und definierte Anpressung der Endabschnitte E1, E2 des Kompensationselementes 6 erfolgt dadurch (siehe **Figur 1** in Verbindung mit **Figur 3**), daß der jeweilige Halte- und Spannring 6.2 durch eine sog. Runddraht-Sprengringverbindung zwischen dem Halte- und Spannring 6.2 und dem zugeordneten Gegenflansch 4 bzw. 5 in der erforderlichen Anpreßposition gehalten wird. Hierzu weist eine außenseitige freie Mantelfläche 6.2d (**Figur 3**) des Halte- und Spannringes 6.2 eine umlaufende, halbkreisförmige Nut 6.2a auf, in die ein Sprengring 8 mit kreisförmigem Querschnitt eingelegt ist, der sich andererseits an einer durch eine umlaufende Ausnehmung 4b oder 5b im Gegenflansch 4 bzw. 5 gebildete Schulter 4c oder 5c in vom Flansch 2 bzw. 3 wegweisender Richtung abstützt. **Figur 3** macht deutlich, daß in der Einbaulage die axiale Position des Sprengringes 8 durch die Position der Schulter 4c bzw. 5c in Bezug auf eine dem Flansch 2,3 zugewandte Begrenzungsfläche A des Anschlußgegenstückes 4,5 bestimmt ist. Die Schulter 4c bzw. 5c hat ihre die Anpressung des Endabschnittes E1 bzw. E2 bestimmende Endlage erreicht, wenn der Gegenflansch 4 bzw. 5 mit seiner jeweiligen Begrenzungsfläche A am Flansch 2 bzw. 3 zur Anlage gekommen ist. In dieser Lage ist zwischen der Begrenzungsfläche A und dem stirnseitigen freien Ende 6.2c des jeweiligen Halte- und Spannringes 6.2 ein axialer Abstand s gegeben. Im Rahmen dieses auf beiden Seiten der Vorrichtung 1 jeweils vorliegenden axialen Abstandes s kann sich das Kompensationselement 6 noch beiderseits axial ausdehnen. Dabei wird die Dichtkraft zwischen dem jeweiligen Endabschnitt E1, E2 und dem zugeordneten Flansch 2 bzw. 3 noch geringfügig erhöht. Das stimseitige freie Ende 6.2c des Halte- und Spannringes 6.2 stellt somit einen metallischen Anschlag dar, der verhindert, daß der Endabschnitt E1, E2 des Kompensationselementes 6 unter dem Einfluß unplanmäßiger Kräfte über das zulässige Maß auf den zugeordneten Flansch 2 bzw. 3 angepreßt wird. Die formschlüssige Verzahnung zwischen dem Endabschnitt E1 bzw. E2 und dem zugeordneten Halte- und Spannring 6.2 erfolgt dadurch, daß in der dem Flansch 2 bzw. 3 zugewendeten Stirnfläche des Halte- und Spannringes 6.2, unterhalb dessen stimseitigem freien Ende 6.2c, jeweils eine stimseitige Nut 6.2b vorgesehen ist, in die ein erster Wulst 6.1d bzw. 6.1 e des den Halte- und Spannring 6.2 jeweils umfassenden Endabschnittes E1 bzw. E2 eingreift (siehe auch **Figur 4**).

Die Montage des Kompensationselementes 6 zwischen den beiden Flanschen 2 und 3 erfolgt dadurch, daß die beiden Sprengringe 8 zunächst auf den jeweiligen Halte- und Spannring 6.2 aufgebracht werden (**Figur 1**). Danach werden der erste Gegenflansch 4 und der zweite Gegenflansch 5, die zwischen den beiden Sprengringen 8 im mittleren Bereich des Kompensationselementes 6 lose auf letzteres aufgeschoben waren, mit ihren jeweiligen umlaufenden Ausnehmungen 4b bzw. 5b über den zugeordneten Sprengring 8 geschoben. Alsdann wird der erste Gegenflansch 4, der mehrere (beispielsweise zehn) der über den Umfang verteilte erste Gewindebohrungen 4d aufweist, mittels einer entsprechenden Anzahl Verbindungsschrauben 7, die über die ersten Durchgangsbohrungen 2a durch den ersten Flansch 2 hindurchgreifen, mit letzterem verschraubt. Dadurch ergibt sich eine definierte Anpressung des Endabschnittes E1 des Kompensationselementes 6 auf den zugeordneten ersten Flansch 2 (siehe **Figur 3**). In gleicher Weise wird der zweite Gegenflansch 5, der mit den zweiten Gewindebohrungen 5d versehen ist, mit dem zweiten Flansch 3, in dem eine entsprechende Anzahl der zweiten Durchgangsbohrungen 3a vorgesehen ist, mit letzterem verschraubt.

Das schlauchförmig ausgestaltete Kompensationselement 6 (**Figur 4**) ist in seinem zwischen den beiden Halte- und Spannringen 6.2 befindlichen mittleren Bereich innenseits von einer Bohrung 6.1 a axial durchdrungen, die vorzugsweise den Querschnitt der miteinander zu verbindenden Rohrenden R1, R2 aufweist. Dadurch ist das Kompensationselement 6 innenseits durchgehend glatt ausgeführt, während es außenseits mit einer wellenformigen Kontur K ausgestattet ist Die erforderlichen elastischen Deformationen des Kompensationselementes 6 werden in vorteilhafter Weise sichergestellt, wenn im mittleren Bereich des Deformationsteils 6.1 vier bis sechs untereinander im wesentlichen gleiche Erhebungen 6.1 c vorgesehen sind, von denen benachbarte jeweils über eine gerundete nutförmige Ausnehmung 6.1 b verbunden sind. Maximale Steifigkeit des Kompensationselementes 6 unter dem Einfluß von Über- oder Unterdruck gegenüber Atmosphärendruck wird erreicht, wenn in jeder Erhebung 6.1 c ein das Kompensationselement 6 vollständig umschließender Stützring 6.3 einvulkanisiert ist.

Die erfindungsgemäße Vorrichtung 1 soll im wesentlichen axiale Änderungen der Einbaulänge B zwischen dem ersten und dem zweiten Flansch 2, 3 durch elastische Deformation des diese Einbaulauge überbrückenden Kompensationselementes 6 zulassen (**Figur 1**). Hierzu ist erfindungsgemäß vorgesehen, daß der erste und der zweite Anschlußteil 2,4 bzw. 3,5 im wesentlichen koaxial zueinander geführt werden. Eine diesbezügliche Führung und die Begrenzung der axialen Ausgleichsbewegungen durch metallische Anschlage verdeutlicht **Figur 2**. Im zweiten Gegenflansch 5 sind mehrere über den Umfang verteilte Führungsbolzen 9 (beispielsweise acht) verankert, und zwar dergestalt, daß die Führungsbolzen 9 mit einem Gewinde versehen sind und jeweils in ein entsprechendes Muttergewinde einer dritten Gewindebohrung 5e im zweiten Gegenflansch 5 eingreifen. Jeder Führungsbolzen 9 greift andererseits durch eine dritte Durchgangsbohrung 4f im zweiten Gegenflansch 4 hindurch und endet dort in einem gegenüber dem Schaft des Führungsbolzens 9 durchmesservergrößerten Kopf 9a Letzterer findet im ersten Gegenflansch 4 innerhalb einer zylindrischen Senkung 4e Aufnahme. Unmittelbar unter dem Kopf 9a ist auf dem Schaft des Führungsbolzens 9 eine Scheibe 12 angeordnet. Weiterhin tragt der Führungsbolzen 9 eine Führungshülse 10, die sich von der Scheibe 12 bis zur Stirnseite des zweiten Gegenflansches 5 erstreckt. Dabei ist die Führungshülse 10 längenmäßig so bemessen, daß zwischen der Scheibe 12 und dem Boden der zylinderförmigen Senkung 4e ein Abstand b entsteht. Der Führungsbolzen 9 ist dadurch über die Scheibe 12 und die Führungshülse 10, axial unverrückbar, in den zweiten Gegenflansch 5 hineingeschraubt. Auf die Führungshülse 10 ist im Bereich zwischen dem ersten Gegenflansch 4 und dem zweiten Gegenflansch 5 eine Distanzbuchse 11 aufgeschoben, die um einen Abstand a kürzer ist als der Abstand zwischen den benachbarten Stirnflächen der Gegenflansche 4 und 5.

Die derart getroffene Anordnung erlaubt nun eine begrenzte axiale Beweglichkeit der Gegenflansche 4 und 5 zueinander. Ein axiales Annähern beider Gegenflansche 4 und 5 zueinander wird durch den Abstand a, der den Stauchungsweg des Kompensationselementes 6 darstellt, sichergestellt. Ein axiales Entfernen der beiden Gegenflansche 4 und 5 voneinander wird durch den vorgenannten Abstand b, der den Dehnungsweg des Kompensationselementes 6 repräsentiert, vorgegeben. Es ist in diesem Zusammenhang bekannt, daß die für derartige Kompensationselemente 6 verwendeten elastomeren Werkstoffe Druckkräfte besser ertragen als Zugkräfte. Daher ist das Kompensationselement 6 in vorteilhafter Weise derart ausgelegt, daß der zwischen den beiden Halte- und Spannringen 6.2 befindliche mittlere Bereich des Deformationsteils 6.1, im Einbauzustand und in der Ausgangsstellung und bei Betriebstemperatur der Vorrichtung 1, im wesentlichen spannungsfrei bleibt, und daß, betragsmäßig gesehen, der Stauchungsweg a annähernd doppelt so groß wie der Dehnungsweg b ausgelegt ist [|a| ≈ 2|b|]. Für eine beispielhaft ausgewählte Rohmennweite DN 65 ist die erfindungsgemäße Vorrichtung 1 für ein weites Spektrum von Anwendungen dann hinreichend zuverlässig ausgelegt, wenn die aus dem Stauchungsweg a und dem Dehnungsweg b resultierende gesamte Längenänderung Δl des Kompensatioselementes 6 annähernd 3 mm beträgt [Δl = |a| + |b| ≈ 3 mm].

Die in **Figur 1** dargestellten Verhältnisse (näherungsweise Spannungsfreiheit im Bereich zwischen den Halte- und Spannringen 6.2 des Kompensationselementes 6) ergeben sich für die jeweilige durchschnittliche Betriebstemperatur. Temperaturunterschiede nach oben führen zu einer Verkürzung der Einbaulänge B zwischen den Flanschen 2 und 3 und somit zu einer Kontraktion des Kompensationselementes 6, wobei der Stauchungsweg a diese Kontraktion eindeutig begrenzt. Bei einer Temperaturänderung nach unten vergrößert sich die Einbaulänge B zwischen den Flanschen 2, 3, so daß das Kompensationselement 6 gedehnt wird. Diese Dehnung ist durch den Dehnungsweg b eindeutig begrenzt. Der Stauchungsweg a und der Dehnungsweg b können mit der vorgeschlagenen Anordnung sehr einfach dadurch verändert werden, daß die jeweilige Länge der Führungshülse 10 oder der Distanzbuchse 11 entsprechend angepaßt wird.

Da die Betriebstemperatur in der Regel oberhalb der Einbautemperatur liegt, ist der Abstand der Flansche 2 und 3 voneinander bei dieser Einbautemperatur größer als er sich in **Figur 1** darstellt. Dies bedeutet, daß das in Figur 1 dargestellte Kompensationselement 6 bei der Einbautemperatur eine Gesamtlänge aufweist, die kleiner ist als der bei diesen Einbautemperaturverhältnissen gegebene Abstand zwischen den Flanschen 2 und 3. Dadurch läßt sich das Kompensationselement 6 einfach und leicht mit axialem Spiel montieren bzw. demontieren.

Aus der vorstehend erwähnten Situation ergibt sich ein weiterer Vorteil, der darin besteht, daß fertigungsbedingte Maßabweichungen des Kompensationselementes 6 sich bei der Einbautemperatur im Rahmen des vorerwähnten Spieles zwischen Kompensationselement 6 und den benachbarten Flanschen 2 und 3 bewegen. Darüber hinaus ist es möglich, Kompensationselemente 6 in anderen Elastomer-Qualitäten in dem selben Vulkanisationswerkzeug zu konfektionieren, ohne daß sich die aus dem unterschiedlichen Schwindungsverhalten resultierenden Maßabweichungen des Kompensationselementes 6 nachteilig auf dessen Montage oder Demontage auswirken.

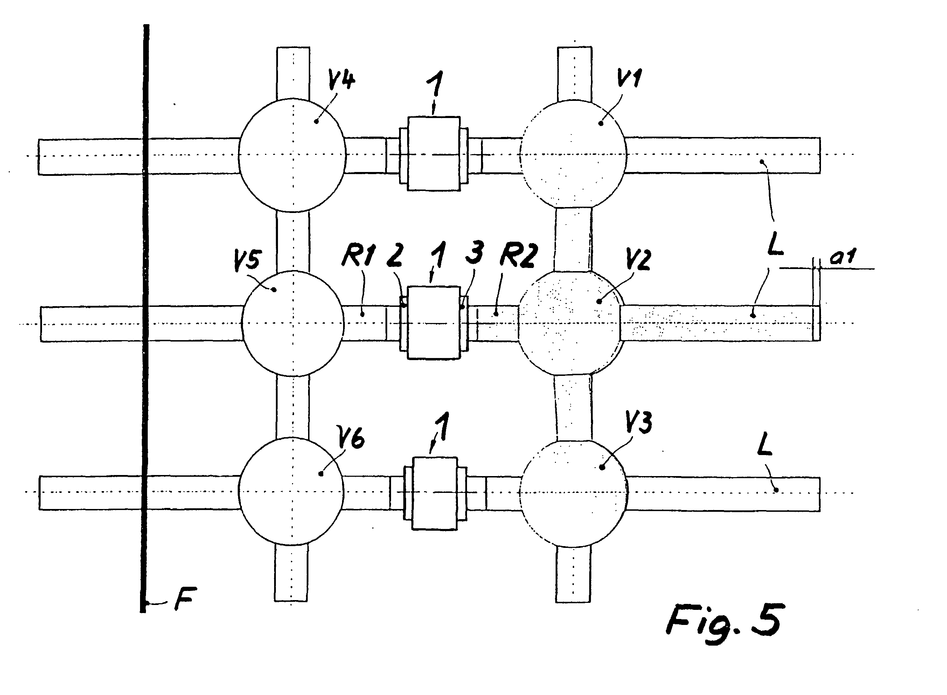

Die Wirkungsweise der erfindungsgemäß vorgeschlagenen Vorrichtung 1 bei ihrem Einsatz in einer sogenannten Ventilmatrix wird nachfolgend beispielhaft beschrieben. Bezogen auf die Darstellungslage bleiben in einer in **Figur 5** ausschnittsweise dargestellten Ventilmatrix beispielsweise die beiden waagerechten, äußeren Rohrleitungsstränge kalt, während im mittleren Rohrleitungsstrang, und hier von rechts bis zum rechten Ventilgehäuse V2, eine Erwärmung der Rohrleitung stattfindet. Jede der drei waagrechten Rohrleitungen ist auf der linken Seite an einer Stelle F festgelegt, so daß dieser Bereich dort jeweils als Festlager fungiert. Zwischen zwei benachbarten Ventilgehäusen V1/V4, V2/V5 und V3/V6 ist in dem jeweils verbindenden Rohrleitungsabschnitt jeweils eine Vorrichtung 1 gemäß der Erfindung angeordnet. Infolge der Erwärmung der mittleren, rechtsseitigen Rohrleitung um das Maß a1 dehnt sich diese aus und verschiebt das zugeordnete Ventilgehäuse V2 und das mit diesem verbundene zweite Rohrende R2 in Richtung der Vorrichtung 1. Letztere ist erfindungsgemäß mit einer axialen Verschieblichkeit (Stauchungsweg a) a ≥ a1 des zweiten Flansches 3 gegenüber dem ersten Flansch 2 versehen, so daß die erwärmte Rohrleitung in den zugelassenen Grenzen in axialer Richtung "arbeiten" kann, ohne daß es zu einer nennenswerten Kraftwirkung auf das erste Rohrende R1 kommt.

Weiterhin wird deutlich, daß es durch die axiale Verschiebung des Ventilgehäuses V2 um das Maß a1 in Richtung der Vorrichtung 1 zu einer Verdrehung der zu den beiden benachbarten Ventilgehäusen V1 und V3 führenden jeweiligen Rohrleitungsabschnitte kommt. Diese Verdrehung muß zum größten Teil von den zugeordneten Ventilgehäusen V1, V3 aufgenommen werden, wobei die Spannungen dort teilweise reduziert werden, wenn die erfindungsgemäße Vorrichtung 1 im Rahmen des Fügespiels im Bereich der Führungsbolzen 9 (**Figur 2**) in begrenztem Umfang Gelenkfunktion übernimmt.

## Patentansprüche

1. Vorrichtung (1) zum lösbaren Verbinden von Wärmedehnungen unterworfenen Rohren,
• mit einem mit einem ersten Rohrende (R1) des einen Rohres verbundenen ersten Anschlußteil (2, 4), das von einem an dem ersten Rohrende (R1) angeordneten ersten Anschlußstück (2) und einem mit letzterem verbundenen ersten Anschlußgegenstück (4) gebildet wird,
• mit einem mit einem zweiten Rohrende (R2) des anderen Rohres verbundenen zweiten Anschlußteil (3, 5), das von einem an dem zweiten Rohrende (R2) angeordneten zweiten Anschlußstück (3) und einem mit letzterem verbundenen zweiten Anschlußgegenstück (5) gebildet wird,
• wobei das erste und das zweite Anschlußteil (2,4; 3,5) im wesentlichen koaxial zueinander geführt werden und zwei metallische Anschläge (4,11,5; 9a,12,4) vorgesehen sind, die die axiale Relativbewegung der Anschlußteile (2,4; 3,5) zueinander begrenzen, und
• mit einem zwischen den Anschlußteilen (2, 4; 3, 5) angeordneten, mit diesen jeweils dichtend verbundenen, elastischen Kompensationselement (6),
• das einen Abstand zwischen dem ersten und dem zweiten Anschlußstück (2, 3) überbrückt und dort Änderungen dieses Abstandes durch elastische Deformation zuläßt und
• das innenseits vom Rohrquerschnitt (6.1a) unmittelbar axial durchdrungen ist und schlauchförmige Gestalt besitzt,
**dadurch gekennzeichnet,**
• **daß** in jedem der beiden Endabschnitte (E1, E2) eines Deformationsteils (6.1) des Kompensationselementes (6) ein Halte- und Spannring (6.2) einvulkanisiert ist,
• der den zugeordneten Endabschnitt (E1, E2) in formschlüssiger Verbindung mit dem an diesem außenseits angreifenden jeweiligen Anschlußgegenstück (4, 5), unabhängig von einer im Einbauzustand gegebenen Vorspannung des Kompensationselementes (6), auf das zugeordnete Anschlußstück (2, 3) definiert anpreßt.

2. Vorrichtung nach Anspruch 1, **dadurch gekennzeichnet, daß** das erste und das zweite Anschlußstück (2, 3) jeweils als Flansch und daß das erste und das zweite Anschlußgegenstück (4, 5) jeweils als komplementärer Gegenflansch ausgebildet sind.

3. Vorrichtung nach Anspruch 1, **dadurch gekennzeichnet, daß** das erste und das zweite Anschlußteil (2,4; 3,5) jeweils als Rohrverschraubung ausgeführt sind.

4. Vorrichtung nach einem der Ansprüche 1 oder 3, **dadurch gekennzeichnet, daß** das Anschlußstück (2, 3) und das zugeordnete Anschlußgegenstück (4, 5) jeweils miteinander verschraubt sind.

5. Vorrichtung nach einem der Ansprüche 1 bis 4, **dadurch gekennzeichnet, daß** das Kompensationselement (6) innenseits durchgehend glatt und in seinem zwischen den beiden Halte- und Spannringen (6.2) befindlichen mittleren Bereich außenseits mit einer wellenförmigen Kontur (K) ausgeführt ist, und daß in wenigstens einer der Erhebungen (6.1c) der Kontur (K) ein das Kompensationselement (6) vollständig umschließender Stützring (6.3) einvulkanisiert ist.

6. Vorrichtung nach einem der Ansprüche 1 bis 5, **dadurch gekennzeichnet, daß** der Endabschnitt (E1, E2) vom zugeordneten Halte- und Spannring (6.2) außenseits berandet ist, mit diesem formschlüssig verzahnt ist und über dessen stimseitiges freies Ende (6.2c) ein Stück übersteht.

7. Vorrichtung nach Anspruch 6, **dadurch gekennzeichnet, daß** eine außenseitige freie Mantelfläche (6.2d) des Halte- und Spannringes (6.2) eine umlaufende, halbkreisförmige Nut (6.2a) aufweist, in die ein Sprengring (8) mit kreisförmigem Querschnitt eingelegt ist, der sich andererseits an einer durch eine umlaufende Ausnehmung (4b; 5b) im Anschlußgegenstück (4; 5) gebildete Schulter (4c, 5c) in vom Anschlußstück (2, 3) wegweisender Richtung abstützt, und daß dabei das stirnseitige freie Ende (6.2c) um einen axialen Abstand (s) gegenüber einer dem Anschlußstück (2, 3) zugewandten Begrenzungsfläche (A) des Anschlußgegenstückes (4, 5) zurücktritt.

8. Vorrichtung nach einem der Ansprüche 1 bis 7, **dadurch gekennzeichnet, daß** im mittleren Bereich des Deformationsteils (6.1) vier bis sechs untereinander im wesentlichen gleiche Erhebungen (6.1c) vorgesehen sind, von denen benachbarte jeweils über eine gerundete nutförmige Ausnehmung (6.1 b) verbunden sind.

9. Vorrichtung nach Anspruch 8, **dadurch gekennzeichnet, daß** in jeder Erhebung (6.1c) ein Stützring (6.3) einvulkanisiert ist.

10. Vorrichtung nach einem der Ansprüche 1 bis 9, **dadurch gekennzeichnet, daß** das erste und das zweite Anschlußgegenstück (4, 5) über einen in dem Anschlußgegenstück (4 oder 5) verankerten und in dem anderen Anschlußgegenstück (5 oder 4) verschieblich geführten Führungsbolzen (9) geführt werden.

11. Vorrichtung nach Anspruch 10, **dadurch gekennzeichnet, daß** ein axiales Annähern beider Anschlußgegenstücke (4, 5) zueinander, ein Stauchungsweg (a), durch zwischen diesen angeordnete, auf den Führungsbolzen (9) jeweils gelagerte Distanzbuchsen (11) und daß ein axiales Entfernen der beiden Anschlußgegenstücke (4, 5) voneinander, ein Dehnungsweg (b), durch einen als Anschlag ausgebildeten Kopf (9a) des Führungsbolzens (9), der am Anschlußgegenstück (4 oder 5) zur Anlage kommt, begrenzt sind.

12. Vorrichtung nach einem der Ansprüche 1 bis 11, **dadurch gekennzeichnet, daß** das Kompensationselement (6) derart ausgelegt ist, daß der zwischen den beiden Halte- und Spannringen (6.2) befindliche mittlere Bereich des Deformationsteils (6.1), im Einbauzustand und in der Ausgangsstellung und bei Betriebstemperatur der Vorrichtung (1), im wesentlichen spannungsfrei bleibt, und daß, betragsmäßig gesehen, der Stauchungsweg (a) annähernd doppelt so groß wie der Dehnungsweg (b) ausgelegt ist [|a| ≈ 2|b|].

13. Vorrichtung nach Anspruch 11 oder 12, **dadurch gekennzeichnet, daß** eine aus dem Stauchungsweg (a) und dem Dehnungsweg (b) resultierende gesamte Längenänderung (Δl) des Kompensationselementes (6) annähernd 3 mm beträgt [Δl = |a| + |b| ≈ 3 mm].

14. Vorrichtung nach einem der Ansprüche 1 bis 13, **dadurch gekennzeichnet, daß** der Deformationsteil (6.1) aus einem Elastomer hergestellt ist.

## Claims

1. Device for releasable connection of pipes subject to thermal expansion,
• comprising a first connecting part (2, 4) connected to a first pipe end (R1) of the one pipe, which is formed by a first connecting part (2) arranged at the first pipe end (R1) and a first connecting counterpart (4) connected thereto,
• comprising a second connecting part (3, 5) connected to a second pipe end (R2) of the other pipe, which is formed by a second connecting part (3) arranged at the second pipe end (R2) and a second connecting counterpart (5) connected thereto,
• wherein the first and second connecting parts (2,4; 3,5) are substantially guided in mutual coaxial relationship, and two metal stops (4, 11, 5; 9a, 12, 4) are provided, which restrict the axial relative movement of the connecting parts (2,4; 3,5) with regard to each other, and
• comprising an elastic compensation element (6) arranged between the connecting parts (2, 4; 3, 5) and connected in sealing manner with each of them,
• which is bridging a distance between the first and the second connecting part (2,3) and allows variations of this distance there by elastic deformation and
• which is directly axially penetrated by the pipe cross-section (6.1a) and has a hose-shaped design
**characterised in that**
• a retaining and clamping ring (6.2) is vulcanised into each of the two end sections (E1, E2) of a deformation part (6.1) of the compensation element (6),
• which, in a defined manner, presses the associated end section (E1, E2) in form-locking connection with the respective connecting counterpart (4, 5) engaging at the outside thereof onto the associated connecting part (2, 3), independently of a bias of the compensation element (6) given in the mounting state.

2. Device according to claim 1, **characterised in that** the first and the second connecting parts (2,3) are each formed as a flange and that the first and the second connecting counterparts (4, 5) are each formed as a complementary counter-flange.

3. Device according to claim 1, **characterised in that** the first and the second connecting parts (2,4; 3,5) are each constructed as screw pipe joints.

4. Device according to one of the claims 1 or 3, **characterised in that** the connecting part (2,3) and the associated connecting counterpart (4,5) are each screwed to the other one.

5. Device according to one of the claims 1 to 4, **characterised in that** the compensation element (6) is designed continuously smooth on the inside and with a wavelike contour (K) on the outside in its central area located between the two retaining and clamping rings (6.2), and that a supporting ring (6.3) completely enclosing the compensation element (6) is vulcanised into at least one of the ridges (6.1c) of the contour (K).

6. Device according to one of the claims 1 to 5, **characterised in that** the end section (E1, E2) is bounded on the outside by the associated retaining and clamping ring (6.2), is positively geared therewith and projects slightly over the front side free end (6.2) thereof.

7. Device according to claims 6, **characterised in that** a free shell (6.2d) on the outside of the retaining and clamping ring (6.2) comprises a circumferential semicircular groove (6.2a), into which a circlip (8) having a circular cross-section is inserted, which is supported on the other side at a shoulder (4c, 5c) formed by a circumferential recess (4b; 5b) in the connecting counterpart (4; 5) in a direction leading away from the connecting part (2,3), and that the front side free end (6.2c) **in that** retreats by an axial distance (s) with regard to a boundary area (A) of the connecting counterpart (4,5) facing the connecting part (2,3).

8. Device according to one of the claims 1 to 7, **characterised in that** four to six mutually substantially equal ridges (6.1c) are provided in the central area of the deformation part (6.1), adjacent ones of which being connected each through a rounded groove-shaped recess (6.1b).

9. Device according to claim 8, **characterised in that** a support ring (6.3) in vulcanised into each ridge (6.1c).

10. Device according to one of the claims 1 to 9, **characterised in that** the first and the second connecting counterpart (4,5) are guided by a guide bolt (9) anchored into the connecting counterpart (4 or 5) and displaceable guided in the other connecting counterpart (5 or 4).

11. Device according to claim 10, **characterised in that** an axial approaching of the two connecting counterparts (4,5) towards each other defines a compression path (a) through distance bushings (11) arranged between them and each supported on the guide bolts (9), and that an axial movement of the two connecting counterparts (4,5) away from each other defines an expansion path (b) through a head (9a) of the guiding bolt (9) formed as a stop, which comes to abut at the connecting counterpart (4 or 5).

12. Device according to one of the claims 1 to 11, **characterised in that** the compensation element (6) is designed such that the central area located between the two retaining and clamping rings (6.2) of the deformation part (6.1) remains substantially free of tension during the mounting state and in the initial position and during operating temperature of the device (1) and that, with regard to the absolute value, the compression path (a) is designed with almost double the size of the expansion path [|a| ≈ 2|b|]

13. Device according to claims 11 and 12, **characterised in that** a total change of length (Δl) of the compensation element (6) resulting from the compression path (a) and the expansion path (b) is approximately 3 mm [Δl = |a|+|b| ≈ 3 mm].

14. Device according to one of the claims 1 to 13, **characterised in that** the deformation part (6.1) is produced by an elastomer.

## Revendications

1. Dispositif (1) destiné à l'assemblage démontable de conduits soumis à des dilatations thermiques,
- avec une première pièce de raccordement (2, 4) assemblée à une première extrémité de conduit (R1) d'un des conduits, ladite première pièce de raccordement (2, 4) étant formée par une première pièce de raccordement (2) disposée sur la première extrémité de conduit (R1) et par une première contre-pièce de raccordement (4) assemblée à cette dernière,
- avec une deuxième pièce de raccordement (3, 5) assemblée à une deuxième extrémité de conduit (R2) de l'autre conduit, ladite deuxième pièce de raccordement (3, 5) étant formée par une deuxième pièce de raccordement (3) disposée sur la deuxième extrémité de conduit (R2) et par une deuxième contre-pièce de raccordement (5) assemblée à cette dernière,
- les première et deuxième pièces de raccordement (2, 4 ; 3, 5) étant guidées, de manière sensiblement coaxiale l'une par rapport à l'autre et deux butées métalliques (4, 11, 5 ; 9a, 12, 4) qui limitent le mouvement axial relatif des pièces de raccordement (2, 4 ; 3, 5) étant prévues, et
- avec un élément de compensation élastique (6) disposé entre les pièces de raccordement (2, 4 ; 3, 5) et assemblé hermétiquement avec chacune de ces dernières,
- ledit élément de compensation faisant la jonction d'une distance entre la première et la deuxième pièce de raccordement (2, 3) en permettant des modifications de ladite distance par déformation élastique et
- ledit élément de compensation étant traversé directement de manière axiale du côté intérieur de la section transversale du conduit (6.1a) et présentant une forme tubulaire,
**caractérisé**
- **en ce qu'**une bague de maintien et de serrage (6.2) est vulcanisée dans chacune des deux sections terminales (E1, E2) d'une pièce de déformation (6.1) de l'élément de compensation (6),
- ladite bague de maintien et de serrage pressant de manière définie la section terminale affectée (E1, E2) en assemblage par forme avec la contre-pièce de raccordement (4, 5) respective agissant sur cette dernière du côté extérieur, indépendamment d'une précontrainte donnée par l'élément de compensation (6) à l'état de montage, contre la pièce de raccordement (2, 3) affectée.

2. Dispositif selon la revendication 1, **caractérisé en ce que** les première et deuxième pièces de raccordement (2, 3) sont chacune réalisées sous forme de bride et **en ce que** les première et deuxième contre-pièces de raccordement (4, 5) sont chacune réalisées sous forme de contre-bride complémentaire.

3. Dispositif selon la revendication 1, **caractérisé en ce que** la première et la deuxième pièce de raccordement (2, 4 ; 3, 5) sont chacune réalisées sous forme de raccord fileté.

4. Dispositif selon l'une quelconque des revendications 1 à 3, **caractérisé en ce que** la pièce de raccordement (2, 3) et la contre-pièce de raccordement (4, 5) affectée sont chacune vissées l'une avec l'autre.

5. Dispositif selon l'une quelconque des revendications 1 à 4, **caractérisé en ce que** l'élément de compensation (6) est lisse sur toute la longueur du côté intérieur et avec un contour ondulé (K) dans sa zone centrale située entre les deux bagues de maintien et de serrage (6.2), et **en ce qu'**une bague d'appui (6.3) entourant complètement l'élément de compensation (6) est vulcanisée dans au moins une des saillies (6.1c) du contour (K).

6. Dispositif selon l'une quelconque des revendications 1 à 5, **caractérisé en ce que** la section terminale (E1, E2) est bordée du côté extérieur par la bague de maintien et de serrage (6.2) affectée, elle est engrenée par forme avec cette dernière et une pièce dépasse sur l'extrémité libre de son front (6.2c).

7. Dispositif selon la revendication 6, **caractérisé en ce qu'**une aire enveloppante libre du côté extérieur (6.2d) de la bague de maintien et de serrage (6.2) présente une gorge périphérique demi-circulaire (6.2a) dans laquelle est insérée une bague de sûreté (8) à section transversale circulaire, ladite section transversale circulaire s'appuyant d'autre part contre un épaulement formé par un creux périphérique (4b ; 5b) dans la contre-pièce de raccordement (4, 5) dans la direction indiquée par la pièce de raccordement (2, 3), et **en ce que**, ainsi, l'extrémité libre du front (6.2c) s'écarte d'une distance axiale (s) par rapport à une surface de limitation (A) de la contre-pièce de raccordement (4, 5) se tournant vers la pièce de raccordement (2, 3).

8. Dispositif selon l'une quelconque des revendications 1 à 7, **caractérisé en ce que** quatre à six saillies (6.1c) sensiblement identiques entre elles sont prévues dans la zone centrale de la pièce de déformation (6.1), les saillies adjacentes étant chacune reliées via un creux rond en forme de gorge (6.1b).

9. Dispositif selon la revendication 8, **caractérisé en ce qu'**une bague d'appui (6.3) est vulcanisée dans chaque saillie (6.1c).

10. Dispositif selon l'une quelconque des revendications 1 à 9, **caractérisé en ce que** les première et deuxième contre-pièces de raccordement (4, 5) sont guidées à l'aide d'un boulon de guidage (9) ancré dans la contre-pièce de raccordement (4 ou 5) et guidé de manière coulissante dans l'autre contre-pièce de raccordement (5 ou 4).

11. Dispositif selon la revendication 10, **caractérisé en ce qu'**un rapprochement axial des deux contre-pièces de raccordement (4, 5) l'une par rapport à l'autre, un espace d'écrasement (a), est limité par des bagues d'entretoise (11) chacune logées sur le boulon de guidage (9) disposé entre celles-ci, et **en ce qu'**un écartement axial des deux contre-pièces de raccordement (4, 5) l'une par rapport à l'autre, un espace de dilatation (b), est limité par une tête (9a) du boulon de guidage (9) réalisée sous forme de butée qui vient contre la contre-pièce de raccordement (4 ou 5).

12. Dispositif selon l'une quelconque des revendications 1 à 11, **caractérisé en ce que** l'élément de compensation (6) est conçu de manière à ce que la zone centrale de la pièce de déformation (6.1) située entre les deux bagues de maintien et de serrage (6.2) reste sensiblement hors contrainte à l'état de montage et en position initiale ainsi qu'à la température de fonctionnement du dispositif (1), et **en ce que**, en terme de valeurs, l'espace d'écrasement (a) est conçu presque deux fois plus grand que l'espace de dilatation (b) [|a| ≈ 2|b|].

13. Dispositif selon la revendication 11 ou 12, **caractérisé en ce qu'**une déformation linéaire totale (Δl) de l'élément de compensation (6) résultant de l'espace d'écrasement (a) et de l'espace de dilatation (b) s'élève quasiment à 3 mm [Δl=|a|+|b|≈3mm].

14. Dispositif selon l'une quelconque des revendications 1 à 13, **caractérisé en ce que** la pièce de déformation (6.1) est fabriquée à partir d'un élastomère.
